# EUROPEAN PATENT APPLICATION

(11) **EP 0 835 795 A2**
(43) Date of publication of application: **15.04.1998**
(21) Application number: 97113593.4
(22) Date of filing: 06.08.1997
(51) Int. Cl.: B62B 9/08

(54) **Baby stroller with park brake**

(30) Priority: 12.08.1996 US 859303
(71) Applicant: Racing Strollers, Inc., Yakima, Washington 98902 (US)
(72) Inventor: Delorme, Joseph P., Yakima, Washington 98902 (US); Eichenberger, Matthew L., Everett, Washington 98203 (US); Brimacombe, Paul, Camberley GU 16 5WZ (GB)
(74) Representative: Grünecker, Kinkeldey, Stockmair & Schwanhäusser Anwaltssozietät

(57) **Abstract**

An all-terrain baby stroller having a park brake (44). A brake coupler (46) is rotatably mounted on a central portion of a rear axle (26) of the stroller, and an elongated brake arm (50) has a mid-portion (56) rigidly attached to the brake coupler (46). The brake arm includes a ground engaging portion (58) frictionally engageable with the ground surface. The brake arm also has a length to support the rear axle at a parking distance above the ground surface greater than the operational distance when the brake arm is rotated into the rearward position. The brake arm also has a length sufficient to support the rear axle at a distance above the ground surface sufficient to lift the rear wheels above the ground surface when the brake arm is rotated to the central position.

## Description

### Technical Field

The present invention relates to baby strollers, and more particularly, to all-terrain baby strollers.

### Background of the Invention

Traditionally, baby strollers have been used to push an infant slowly on a relatively hard, smooth floor or sidewalk. As a result, the strollers were made small and light. These strollers work well enough at slow speed, but are extremely unwieldy and even dangerous on rough surfaces or at higher speeds.

As parents have become more health conscious in recent times, jogging and fast walking have become popular pastimes. Because baby strollers were not designed to be operated at high speed or on rough terrain, parents could jog or fast walk only when another person was available to baby-sit. As any parent knows, it is not always easy to find a baby-sitter, so the ability of the parent to stay in shape by jogging or fast walking was severely limited.

Even for non-jogging parents, the need for an improved baby stroller has been apparent. The small, plastic wheels customarily used for the baby strollers are almost useless when it is desired to walk with an infant in a grassy park or on a rough road or sidewalk. Parents end up not walking with the infant at all or only walking in limited areas.

All-terrain baby strollers have been designed to overcome these problems. These strollers typically employ much larger wheels, often large bicycle tires. The stroller frame and frame connections are constructed to be stronger and larger to handle the heavy duty use they may receive. It is now quite common to see a parent pushing an infant while jogging, fast walking or even just slow walking in grassy, bumpy areas or over other rough terrain.

These new strollers are sometimes equipped with conventional caliper brakes actuated by a hand lever to help slow and stop the stroller. Once stopped, however, it is desirable to insure that the stroller does not roll away while the parent removes his or her hands from the stroller, such as to tie a loose shoe lace, other than a tether line attached at one end to the stroller and at the other end to the parent. Of course, if the stroller is equipped with a caliper brake the parent could continue to apply the caliper brake, either manually or using a lock pin if so equipped, but doing so is difficult or sometimes undesirable. If the stroller is not equipped with a caliper brake, another way must be used to prevent the stroller from rolling away, especially when parked on an incline. One such foot operated park brake is shown in U.S. Patent No. 5,460,399.

It can be appreciated that a substantial need exists for an easy to use and inexpensive to manufacture park brake for use on a stroller, especially an all-terrain stroller. The present invention provides such a park brake. The brake not only has a simple and inexpensive construction, it is easy to use and provides a reliable and safe brake.

### Summary of the Invention

The present invention resides in a baby stroller having a park brake. The baby stroller has a frame with a rear axle and left and right rear wheels mounted to the rear axle at the ends thereof for rotation relative to the frame. The rear axle has a central portion located between its left and right ends. A seat is supported by the frame generally toward and above the rear axle and sized to carry an occupant therein. The left and right rear wheels support the rear axle when an occupant is being carried in the seat at an operational distance above the support surface.

A brake member has a brake coupling rotatably mounted to the rear axle at the central portion thereof for rotation about an axis of rotation. The brake member also includes a brake arm with a support surface engaging portion and an attachment portion spaced away from the support surface engaging portion. The attachment portion is rigidly attached to the brake coupler and the support surface engaging portion is engageable with a support surface. The brake arm is rotatable with the brake coupler about the rear axle for rotation of the brake arm between a forward position with the support surface engaging portion forward of the rear axle and out of engagement with the support surface, and a rearward position with the support surface engaging portion below and rearward of the rear axle in engagement with the support surface. The brake arm has a length measured between the axis of rotation of the brake coupler about the rear axle and the support surface engagement portion. The brake arm length is sized to support the rear axle at a parking distance about the support surface greater than the operational distance when the brake arm is rotated to the rearward position.

A stop member is positioned to prevent rotation of the brake arm rearward beyond the rearward position.

A return member applies a rotation force on the brake member to rotate the brake arm toward the forward position when the support surface engaging portion is out of engagement with the support surface.

The support surface engaging portion has left and right laterally extending end portions. The left and right laterally extending end portions extend sufficiently to support the stroller against lateral tipping. The frame of the stroller includes a frame member positioned to be engaged by the support surface engaging portion to prevent rotation of the brake arm forward beyond the forward position.

The stroller frame includes a frame member positioned to be engaged by the stop member to prevent rotation of the brake arm rearward beyond the rearward position.

The brake arm length is sized such that when supporting the rear axle at the parking distance above the support surface the left and right rear wheels are both touching the support surface.

The stop member has a foot engageable portion positioned when the brake arm is in the forward position to be engaged by a foot of a user of the stroller from behind the stroller for applying a force to the stop member with the foot to rotate the brake arm from the forward position to at least substantially toward the rearward position. The support surface engaging portion has a foot engageable portion positioned when the brake arm is in the rearward position to be engaged by a foot of a user of the stroller from behind the stroller for applying a force to the support surface engaging portion with the foot to prevent rearward movement of the support surface engaging portion along the support surface as the user pulls the frame rearward to rotate the brake arm from the rearward position to at least substantially toward the forward position.

Other features and advantages of the invention will become apparent from the following detailed description, taken in conjunction with the accompanying drawings.

### Brief Description of the Drawings

Figure 1 is an isometric view of a baby stroller embodying the present invention, with a seat being shown in broken lines.

Figure 2 is an enlarged, fragmentary isometric view of the rear axle and park brake assembly of Figure 1 showing the park brake in a forward disengaged position.

Figure 3 is an enlarged, fragmentary, isometric view of the rear axle and park brake assembly of Figure 1 showing the park brake in a rearward ground engaging park position.

Figure 4A is a reduced, right side view of the stroller of Figure 1 shown with a user's foot on the park brake which is in the forward disengaged position.

Figure 4B is a reduced, right side view of the stroller of Figure 1 shown with the park brake in a central position engaging the ground.

Figure 4C is a reduced, right side view of the stroller of Figure 1 shown with the park brake in the rearward ground engaging park position.

### Detailed Description of the Invention

As shown in the drawings for purposes of illustration, the present invention is embodied in an all-terrain baby stroller 10 having a foldable frame 12 with a rear axle assembly 14. Left and right rear wheels 16 of equal radius are rotatably mounted to the rear axle assembly 14. The forward end of the frame 12 has a single front wheel 18 rotatably mounted thereto. The frame 12 includes left and right side horizontal base frame tubes 20 extending rearwardly from the front wheel 18, in parallel spaced-apart relation to each other, to the rear axle assembly 14. The horizontal base frame tubes 20 are manufactured from straight tube stock. The horizontal base frame tubes 20 are oriented at a 90° angle with respect to the rear axle assembly 14.

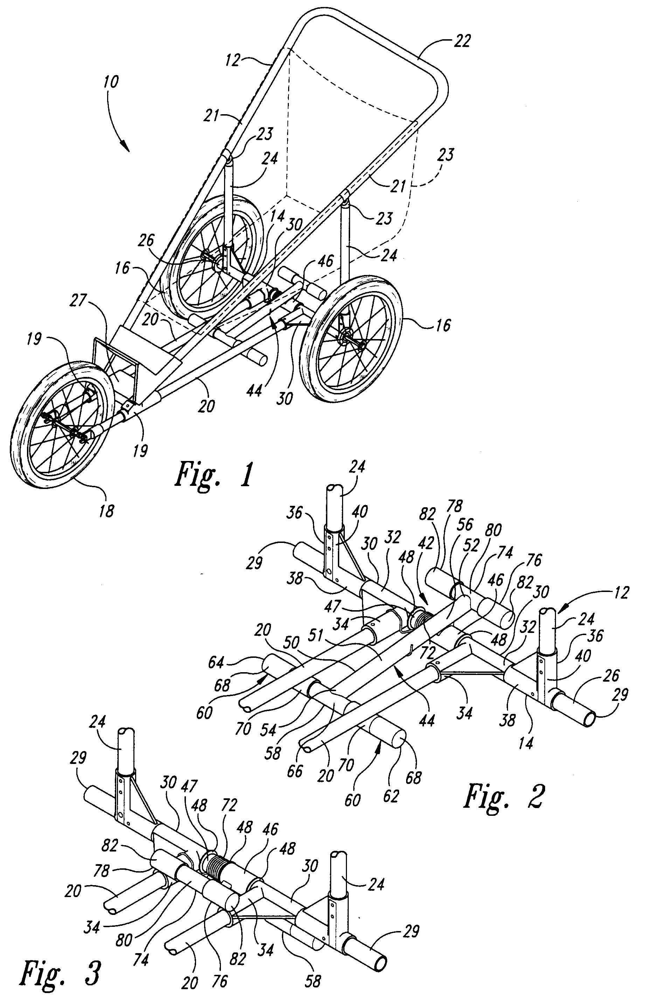

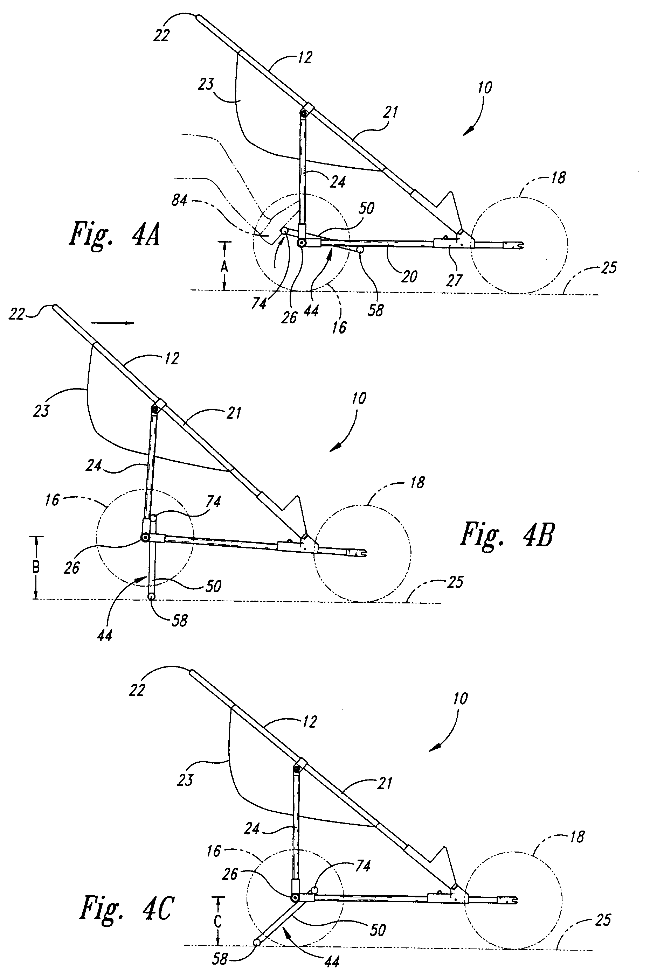

The frame 12 also includes left and right, downwardly sloping upper frame tubes 21 which at a rearward end have a handle 22 extending therebetween at a height convenient for a user to push the stroller 10, and extend downwardly therefrom to the horizontal base frame tubes 20 at a position near the rearwardmost extent of the front wheel 18. The upper frame tubes 21 support a seat 23 shown in broken lines in Figure 1 for carrying of an occupant (not shown) as the stroller is moved across a ground surface 25 (shown in Figures 4A-4C). The seat 23 is positioned between the left and right upper frame tubes 21 above the horizontal base frame tubes 20, to position the torso of the occupant and hence the weight of the occupant generally toward and above the rear axle assembly 14. The placement is selected to cause the center of gravity of the stroller 10 with the occupant in the seat 23 to be located slightly forward of the rear axle assembly 14 to allow a user who is pushing the stroller to easily press downward on the handle to raise the front wheel 18 off of the ground surface to go over bumps, curbs and the like, but still maintain a center of gravity sufficiently forward of the rear axle assembly 14 so that the stroller does not easily tip over backwards.

The forward ends of the upper frame tubes 21 are releasably coupled to the horizontal base frame tubes 20 by left and right frame connectors 19 so that when released the stroller 10 can be folded. The left and right frame connectors 19 are rigidly attached to a spacer member 27 which spans between and is rigidly attached to the horizontal base frame tubes 20 to maintain them in a fixed spaced-apart relation.

The frame 12 further includes left and right upright support tubes 24 extending between the rear axle assembly 14 and the upper frame tubes 21 at a position below and forward of the handle 22. The upright support tubes 24 are pivotally connected to the upper frame tubes 21 by pivot joints 23, and are fixedly connected to the rear axle assembly 14 by couplers as will be described below to permit folding of the stroller when the frame connectors 19 are released to free the forward ends of the upper frame tubes 21 from the horizontal base frame tubes 20.

The rear axle assembly 14 uses a non-rotating tubular metal axle 26 (as best shown in Figure 2) having left and right ends 29. The tubular axle 26 is open at both its left and right ends 29. Each of the rear wheels 16 of the stroller 10 is rotatably mounted on an outer end portion of a stub axle (not shown) having a circular cross section for rotation about an axis of wheel rotation. An inward end portion of each stub axle is sized to be releasably inserted into and snugly retained within the opening of the corresponding left or right end 29 of the tubular axle 26.

Each of the horizontal base frame tubes 20 is coupled to the tubular axle 26 by a first coupler 30 with a tubular connector portion 32 rotatably receiving the tubular axle 26 therethrough to permit rotation of the horizontal base frame tubes relative to the tubular axle upon folding of the frame 12 for storage or transport. The first coupler 30 also has a frame tube receiver portion 34 within which a corresponding one of the left or right horizontal base frame tubes 20 is inserted and fixed in place. The tubular connector portion 32 and the frame tube receiver portion 34 of each of the first couplers 30 are rigidly attached together.

Each of the upright support tubes 24 is coupled to the tubular axle 26 by a second coupler 36 with a tubular connector portion 38 receiving the tubular axle 26 therein. The tubular connector portion 38 and the tubular axle 26 are fixedly attached together. The second coupler 36 also has a frame tube receiver portion 40 within which a corresponding one of the left or right upright support tubes 24 is inserted and fixed in place. The tubular connector portion 38 and the frame tube receiver portion 40 of each of the second couplers 36 are rigidly attached together.

As a result of this construction, the upright support tubes 24 and the tubular axle 26 are fixed together and rotate as a unit when the frame 12 is folded for storage or transport. With this arrangement, the first couplers 30, which hold the horizontal base frame tubes 20, and the second couplers 36, which hold the upright support tubes 24, can be freely rotated relative to each other by a sufficient amount to allow the folding of the upright support tubes downward relative to the horizontal base frame tubes for folding of the stroller 10.

The inward ends of the tubular connector portions 32 of the first couplers 30 are spaced apart on the tubular axle 26 by almost the distance between the horizontal base tubes 20. The space between the inward ends of the tubular connector portions 32 corresponds to a central portion 42 of the tubular axle 26 located mid-way between the left and right ends 29 of the tubular axle.

A park brake, indicated generally by reference numeral 44, includes a tubular brake coupler 46, positioned between the inward ends of the tubular connector portions 32 of the first couplers 30. The brake coupler 46 is tubular and rotatably receives the central portion 42 of the tubular axle 26 therethrough to permit rotation of the brake coupler about the tubular axle about an axis of rotation coincident with the axis of wheel rotation of the rear wheels 16 on the tubular axle. A spacer sleeve 47 is positioned on the central portion 42 of the tubular axle 26 between the brake coupler 46 and the inward end of the tubular connector portion 32 of the right side first coupler 30. The spacer sleeve 47 has an outer diameter smaller than the brake coupler 46. The combined axial lengths of the spacer sleeve 47 and the brake coupler 46 are nearly equal to the spacing between the inward ends of the tubular connector portions 32, leaving room for the use of three washer bushings 48 positioned coaxially on the tubular axle 26.

One of the washer bushings 48 is positioned between the left outward end of the brake coupler 46 and the corresponding inward end of the tubular connector portion 32 of the left side first coupler 30 and another is positioned between the right outward end of the brake coupler and the left end of the spacer sleeve 47 to reduce friction therebetween. The third washer bushing 48 is positioned between the right end of the spacer sleeve 47 and the corresponding inward end of the tubular connector portion 32 of the right side first coupler 30 to reduce friction therebetween. Lateral movement of the brake coupler 46 on the tubular axle 26 is restrained by the bushings 48, the spacer sleeve 47, and the inward ends of the tubular connector portions 32, while allowing free rotation of the brake coupler 46 on the central portion 42 of the tubular axle 26.

The park brake 44 further includes a brake arm 50 having an elongated shaft 51 with first and second spaced-apart ends 52 and 54, respectively, and a mid-portion 56 located therebetween. The brake shaft mid-portion 56 is rigidly attached to the brake coupler 46 by a weld. While this and other rigid connections of parts are described as being rigidly connected by a weld, alternatively the connections may be made using molded plastic connectors. The second shaft end 54 has a ground engaging member 58 rigidly attached thereto with a ground engaging surface 60 frictionally engageable with the ground surface 25. The "ground surface" referred to herein can be earth, surfacing material, flooring material or any other support surface over which the stroller 10 is positioned and which the rearward and forward wheels 16 and 18 engage during operation of the stroller.

The brake arm 50 is rotatable with the brake coupler 46 about the central portion 42 of the tubular axle 26 for rotation between a forward disengaged position shown in Figures 2 and 4A, and a rearward ground engaging or park position shown in Figures 3 and 4C through a forwardly extending, vertical plane. When the brake arm 50 rotates between the forward and rearward positions, it passes through a central or intermediate position shown in Figure 4B. As can be best seen in Figure 4A, when the brake arm 50 is in the forward position, the ground engaging member 58 is positioned forward of the tubular axle 26 and the ground engaging surface 60 is out of engagement with the ground surface 25. As can be best seen in Figure 4C, when the brake arm 50 is in the rearward position, the ground engaging member 58 is below and rearward of the tubular axle 26 and the ground engaging surface 60 is in engagement with the ground surface 25. As can be best seen in Figure 4B, when the brake arm 50 is in the central position, the shaft 51 of the brake arm 50 extends downward from the brake coupler 46 toward the ground surface 25, shown in Figure 4B in a substantially vertical orientation, and the ground engaging member 58 is immediately below the tubular axle 26 and the ground engaging surface 60 is in engagement with the ground surface 25.

When the stroller 10 has an occupant in the seat 23, the left and right rear wheels 16 support the tubular axle 26 at an operational first distance above the ground surface 25, indicated by letter "A" in Figure 4A, when the brake arm 50 is rotated to the forward position. The brake arm 50 has a second end portion length measured between the axis of rotation of the brake coupler 46 about the tubular axle 26 and the ground engaging surface 60 of the ground engaging member 58. The second end portion length of the brake arm 50 is manufactured with a length sized to support the tubular axle 26 at a transitional second distance above the ground surface 25, indicated by letter "B" in Figure 4B, when the brake arm 50 is rotated to the central position, with the rear wheels 16 being lifted above and out of engagement with the ground surface. More significantly, the second end portion length of the brake arm 50 is manufactured with a length sized to support the tubular axle 26 at a parking third distance above the ground surface 25, indicated by letter "C" in Figure 4C, when the brake arm 50 is rotated to the rearward position.

In the embodiment of the stroller 10 illustrated the rear wheels 16 each remain in contact with the ground surface 25 even when the brake arm 50 is in the rearward (park) position. However, the second end portion length of the brake arm 50 is sized such that when in the rearward position the parking third distance "C" by which the tubular axle 26 is supported above the ground surface 25 is sufficiently greater than the operational first distance "A" such that the brake arm, not the rear wheels 16, transfers nearly the entire downward load to the ground surface applied on the tubular axle by the weight of the stroller and the occupant in the seat 23. As such, a significant frictional force is created between the ground engaging surface 60 of the ground engaging member 58 and the ground surface 25 to prevent undesired forward or rearward movement of the stroller 10 when the stroller is parked with the park brake 44 engaged. Of course, the friction force created is a product of the coefficient of friction involved and the downward force applied through the brake arm 50. While the park brake 44 could be located at a more forward position, its location at or about the tubular axle 26 whereat the load resulting from the stroller's weight and the weight of the occupant in the seat 23 is preferred in order to increase the frictional engagement of the ground engaging member 58 with the ground surface 25.

As noted above, in the illustrated embodiment of the invention the rear wheels 16 remain in contact with the ground surface 25. As such, should a lateral force be applied to the stroller 10, the rear wheels 16 will prevent any significant lateral tipping of the stroller 10 and provide a secure feeling for the occupant. In an alternative embodiment not illustrated, the brake arm 50 can be manufactured with the second end portion length sized to produce a larger parking third distance "C" so that the rear wheels are lifted above and out of engagement with the ground surface 25.

To provide increased stability against lateral tipping for the park brake 44 when the brake arm 50 is in the rearward (park) position, without relying entirely upon the rear wheels 16, the ground engaging member 58 has left and right laterally extending end portions 62 and 64, respectively, and a mid-portion 66 therebetween. The mid-portion 66 is rigidly attached to the second shaft end 54 by a weld.

To increase the frictional engagement of the ground engaging member 58 with the ground surface 25, the left and right laterally extending end portions 62 and 64 of the ground engaging member each have a soft, resilient plastic end cap 68 and an inwardly positioned soft, resilient plastic sleeve 70 positioned thereon and providing the ground engaging surface 60. Alternatively, the sleeve 70 and the end cap 68 on each of the left and right laterally extending end portions can be manufactured as a single unit.

The left and right laterally extending end portions 62 and 64 of the ground engaging member 58 extend sufficiently laterally outward that the sleeve 70 thereon engages a lower side of a corresponding one of the left and right horizontal base frame tubes 20 when the brake arm 50 is rotated into the forward position (see Figures 2 and 4A). The horizontal base frame tubes 20 prevent rotation of the brake arm 50 forward beyond the forward position. The sleeves 70 serve as cushions to deaden impact of the left and right laterally extending end portions 62 and 64 when moved quickly into engagement with the horizontal base frame tubes 20.

In the illustrated embodiment, the brake shaft mid-portion 56 is welded to a side of the brake coupler 46 at a position above the tubular axle 26 when the brake arm 50 is in the forward position. When in the forward position, the brake shaft 51 extends from the brake coupler 46 downward and forward to the second shaft end 54 which is at a location forward of the tubular axle 26 and below the horizontal base frame tubes 20 whereat the ground engaging member 58 is attached to the second shaft end. In such fashion, the left and right laterally extending members 62 and 64 engage the horizontal base frame tubes 20 from below at a location forward of the tubular axle 26 when the brake arm 50 is rotated into the forward position.

A coil spring 72 is coaxially mounted on the spacer sleeve 47 adjacent to the right outward end of the brake coupler 46 and has one spring hook end extending over the frame tube receiver portion 34 of the right side first coupler 30 and a spring hook end extending under the brake shaft 51 between the brake shaft mid-portion 56 and the shaft second end 54 to apply a spring bias force between the frame 12 and the brake arm 50 to rotate the brake arm toward the forward position when the ground engaging member 58 is out of engagement with the ground surface 25. The coil spring 72 has sufficient spring force to rotate the brake arm 50 to the forward position and securely hold the brake arm in such position while the stroller 10 is used under normal operations.

A stop member 74 is rigidly attached to the first shaft end 52 of the brake shaft 51. The stop member 74 has left and right laterally extending end portions 76 and 78, respectively, and a mid-portion 80 therebetween. The mid-portion 80 is rigidly attached to the first shaft end 52 by a weld. The left and right laterally extending end portions 76 and 80 of the stop member 74 extend sufficiently laterally outward that a soft, resilient plastic end cap 82 on each engages an upper side of a corresponding one of the frame tube receiver portions 34 of the left and right side first couplers 30 when the brake arm 50 is rotated into the rearward position (see Figures 3 and 4C). The frame tube receiver portions 34 and the horizontal base frame tubes 20 received therein prevent rotation of the brake arm 50 rearward beyond the rearward position. The end caps 82 serve as cushions to deaden the impact of the left and right laterally extending end portions 76 and 78 when moved quickly into engagement with the frame tube receiver portions 34. When in engagement therewith in the rearward (park) position, the weight of the stroller 10 and the occupant in the seat 23 applies a significant downward force between the left and right laterally extending end portions 76 and 78 of the stop member 74 and the frame tube receiver portions 34 to hold them in secure engagement. This helps inhibit lateral rocking of the brake arm 50 relative to the frame 12 that might otherwise occur should the brake coupler 46 be somewhat loosely fit on the tubular axle 26 (*i.e.*, has an inner diameter larger than the outer diameter of the central portion 42 of the tubular axle).

The brake arm 50 is attached to the brake coupler 46 such that when the brake arm 50 is in the forward position the brake shaft 51 extends from the brake coupler upward and rearward over the tubular axle 26 to the first shaft end 52 at a location rearward of the tubular axle and farther above the tubular axle. In such fashion, the left and right laterally extending end portions 76 and 78 of the stop member 74 engage the frame tube receiver portions 34 from above and at a location forward of the tubular axle 26 when the brake arm 50 is rotated into the rearward position.

As shown in Figure 4A, the stop member 74 is positioned when the brake arm 50 is in the illustrated forward position to be engaged by a foot 84 of a user 86 (both shown in broken line) of the stroller 10 from behind the stroller to facilitate engagement of the park brake 44. In particular, the brake shaft 51 extends sufficiently rearward of the tubular axle 26 for easy contact by the foot 84 of the user 86 to apply a sufficient clockwise force (*i.e.*, upward and forward force) to the stop member 74 (when viewed from the right side of the stroller as in Figure 4A) while the user holds onto the handle 22 with his or her hands to rotate the brake arm 50 from the forward position at least sufficiently toward the central position that the ground engaging member 58 engages the ground surface 25.

Next, the user places his or her foot atop the left or right laterally extending end portion 62 or 64 of the ground engaging member 58 and applies a downward force thereto while pushing and preferably lifting upward on the handle 22 of the stroller 10 to move the stroller and the brake arm 50 into the central position shown in Figure 4B with a large part of the weight of the stroller 10 and the occupant in the seat 23 being applied through the brake arm to the ground surface 25. The user can then remove his or her foot from the ground engaging member 58. The user next simply pushes the stroller 10 forward until the brake arm 50 rotates into the rearward (park) position shown in Figure 4C.

The ground engagement member 58 is positioned when the brake arm 50 is in the rearward position to be conveniently engageable by the foot of the user from behind the stroller 10. To disengage the park brake 44, the user stands behind the stroller 10 and places his or her foot atop the left or right laterally extending end portion 62 or 64 of the ground engaging member 58 and applies a downward force thereto while pulling rearward on the handle 22. When the brake arm 50 is rotated sufficiently past the central position so that the ground engaging member 58 is no longer held in engagement with the ground surface 25, the coil spring 72 will rotate the brake arm back to the forward position.

The brake arm 50 is arranged so that when rotated into the rearward (park) position a significant rearward force must be applied to the stroller to cause the brake arm to rotate to the central position and cause disengagement of the park brake 44. This prevents unintentional disengagement of the park brake 44. It is noted that a significant rearward angular slant has been chosen for the brake arm 50 when in the rearward position as well as a length that requires a significant portion of the weight of the stroller and the occupant in the seat 23 to be lifted by the user when pulling the stroller rearward to rotate the brake arm toward the central position. As the brake arm 50 is rotated toward the central position the rear wheels 16 must be lifted off of the ground surface to disengage the park brake. As such, the weight of the stroller and the occupant serve to help lock the park brake 44 securely in the brake arm 50 in the rearward position of Figure 4C.

It will be appreciated that, although a specific embodiment of the invention has been described herein for purposes of illustration, various modifications may be made without departing from the spirit and scope of the invention. Accordingly, the invention is not limited except as by the appended claims.

## Claims

1. A baby stroller for moving an occupant across a support surface, comprising:
a frame;
a forward wheel rotatably mounted to said frame;
a rear axle with left and right ends and a central portion located therebetween, said axle being attached to said frame;
a seat supported by said frame generally toward and above said rear axle and sized to carry the occupant therein;
a left rear wheel having a rear wheel radius rotatably mounted relative to said frame at said left axle end;
a right rear wheel having said rear wheel radius rotatably mounted relative to said frame at said right axle end, said left and right rear wheels supporting said rear axle when the occupant is being carried in said seat at a first distance above the support surface;
a brake member having a brake coupler rotatably mounted on said rear axle at said central portion thereof for rotation about an axis of rotation, and an elongated brake arm with first and second end portions and a mid-portion therebetween, said mid-portion being rigidly attached to said brake coupler and said second end portion having a support surface engaging portion frictionally engageable with the support surface, said brake arm having a second end portion length measured between said axis of rotation of said brake coupler about said rear axle and said support surface engaging portion of said second end portion, said brake arm being rotatable with said brake coupler about said rear axle for rotation of said brake arm between a forward position with said support surface engaging portion forward of said rear axle and out of engagement with the support surface, a central position with said support surface engaging portion immediately below said rear axle in engagement with the support surface, and a rearward position with said support surface engaging portion below and rearward of said rear axle in engagement with the support surface, said second end portion length of said brake arm being sized to support said rear axle at a second distance above the support surface sufficient to lift said left and right rear wheels above the support surface when said brake arm is rotated to said central position, and to support said rear axle at a third distance above the support surface greater than said first distance when said brake arm is rotated to said rearward position;
a stop member attached to said first end portion of said brake arm and positioned to engage said frame to prevent rotation of said brake arm rearward beyond said rearward position; and
a return member engaging said brake member and said frame to rotate said brake arm toward said forward position when said support surface engaging portion is out of engagement with the support surface.

2. The stroller of claim 1 wherein said brake arm is rotatable with said brake coupler for rotation between said forward and rearward positions through a forwardly extending, substantially vertical plane.

3. The stroller of claim 1 wherein said support surface engaging portion has left and right laterally extending end portions and a mid-portion therebetween rigidly attached at said second end portion of said brake arm.

4. The stroller of claim 3 wherein said frame includes left and right spaced-apart lower frame members extending from said rear axle toward said forward wheel, said left and right laterally extending end portions of said support surface engaging portion each extending sufficiently to engage a corresponding one of said left and right lower frame members to prevent rotation of said brake arm forward beyond said forward position.

5. The stroller of claim 4 wherein the stroller further includes left and right cushions positioned to be between corresponding ones of said left and right laterally extending end portions of said support surface engaging portion and said left and right lower frame members when in engagement therewith to prevent rotation of said brake arm forward beyond said forward position.

6. The stroller of claim 5 wherein said left and right cushions are carried by said left and right laterally extending portions of said support surface engaging portion, respectively.

7. The stroller of claim 4 wherein said second end portion of said brake arm has said mid-portion of said support surface engaging portion attached thereto at a position below said lower frame members and said left and right laterally extending end portions of said support surface engaging portion engaging said left and right lower frame members from below when said brake arm is rotated to said forward position.

8. The stroller of claim 7 wherein said mid-portion of said brake arm is rigidly attached to said brake coupler in a position whereat said mid-portion of said brake arm is above said rear axle when said brake arm is in said forward position, and when in said forward position said second end portion of said brake arm extends from said mid-portion of said brake arm above said rear axle to below said rear axle whereat said mid-portion of said support surface engaging portion is attached to said second end portion of said brake arm.

9. The stroller of claim 8 wherein when in said forward portion said first end portion of said brake arm extends from said mid-portion of said brake arm above said rear axle to a position further above said rear axle whereat said stop member is attached to said first end portion of said brake arm.

10. The stroller of claim 7 wherein said stop member has left and right laterally extending end portions and a mid-portion therebetween rigidly attached at said first end portion of said brake arm, said left and right laterally extending end portions of said stop member each extending sufficiently to engage a corresponding one of said left and right lower frame members to prevent rotation of said brake arm rearward beyond said rearward position.

11. The stroller of claim 10 wherein said first end portion of said brake arm has said mid-portion of said stop member attached thereto at a position above said lower frame members and said left and right laterally extending end portions engaging said left and right lower frame members from above when said brake arm is rotated to said rearward position.

12. The stroller of claim 1 wherein said return member is a spring biasing said brake arm to rotate from said rearward and central positions toward said forward position.

13. The stroller of claim 1 wherein said support surface engaging portion has a frictional covering positioned to engage the support surface when the brake arm is in said central and rearward positions.

14. The stroller of claim 1 wherein said support surface engaging portion has left and right laterally extending end portions extending sufficiently to support the stroller against lateral tipping.

15. The stroller of claim 1 wherein said second end portion length of said brake arm is sized to support said rear axle at said third distance above the support surface with said left and right rear wheels both touching the support surface.

16. The stroller of claim 1 wherein said stop member is positioned when said brake arm is in said forward position to be engageable by a foot of a user of the stroller from behind the stroller for applying a force to said stop member with the foot to rotate said brake arm from said forward position at least substantially toward said central position.

17. The stroller of claim 1 wherein said support surface engaging portion is positioned when said brake arm is in said rearward position to be engageable by a foot of a user of the stroller from behind the stroller for applying a force to said support surface engaging portion with the foot to prevent rearward movement of the support surface engaging portion along the support surface as the user pulls the frame rearward to rotate the brake arm from said rearward position at least substantially toward said central position.

18. The stroller of claim 1 wherein said support surface engaging portion includes an extending member and said frame includes at least one frame member positioned to be engaged by said extending member to prevent rotation of said brake arm forward beyond said forward position.

19. A baby stroller for moving an occupant across a support surface, comprising:
a frame;
a forward wheel rotatably mounted to said frame;
a rear axle with left and right ends and a central portion located therebetween, said axle being attached to said frame;
a seat supported by said frame generally toward and above said rear axle and sized to carry the occupant therein;
a left rear wheel having a rear wheel radius rotatably mounted relative to said frame at said left axle end;
a right rear wheel having said rear wheel radius rotatably mounted relative to said frame at said right axle end, said left and right rear wheels supporting said rear axle when the occupant is being carried in said seat at an operational distance above the support surface;
a brake member having a brake coupler rotatably mounted on said rear axle at said central portion thereof for rotation about an axis of rotation, and a brake arm with a support surface engaging portion and an attachment portion spaced away from said support surface engaging portion, said attachment portion being rigidly attached to said brake coupler and said support surface engaging portion being engageable with the support surface, said brake arm being rotatable with said brake coupler about said rear axle for rotation of said brake arm between a forward position with said support surface engaging portion forward of said rear axle and out of engagement with the support surface, and a rearward position with said support surface engaging portion below and rearward of said rear axle in engagement with the support surface, said brake arm having a length measured between said axis of rotation of said brake coupler about said rear axle and said support surface engaging portion, said brake arm length being sized to support said rear axle at a parking distance above the support surface greater than said operational distance when said brake arm is rotated to said rearward position; and
a stop member positioned to prevent rotation of said brake arm rearward beyond said rearward position.

20. The stroller of claim 19, further including a return member positioned to apply a rotational force on said brake member to rotate said brake arm toward said forward position when said support surface engaging portion is out of engagement with the support surface.

21. The stroller of claim 19 wherein said brake arm is rotatable with said brake coupler for rotation between said forward and rearward positions through a forwardly extending, substantially vertical plane.

22. The stroller of claim 19 wherein said support surface engaging portion has left and right laterally extending end portions.

23. The stroller of claim 22 wherein said left and right laterally extending end portions extend sufficiently to support the stroller against lateral tipping.

24. The stroller of claim 19 wherein said frame includes a frame member positioned to be engaged by said support surface engaging portion to prevent rotation of said brake arm forward beyond said forward position.

25. The stroller of claim 24 wherein said support surface engaging portion is positioned to engage said frame member from below when said brake arm is rotated to said forward position.

26. The stroller of claim 19 wherein said frame includes a frame member positioned to be engaged by said stop member to prevent rotation of said brake arm rearward beyond said rearward position.

27. The stroller of claim 26 wherein said stop member is positioned to engage said frame member from above when said brake arm is rotated to said rearward position.

28. The stroller of claim 19 wherein said brake arm length is sized to support said rear axle at said parking distance above the support surface with said left and right rear wheels both touching the support surface.

29. The stroller of claim 19 wherein said stop member has a foot engageable portion positioned when said brake arm is in said forward position to be engageable by a foot of a user of the stroller from behind the stroller for applying a force to said stop member with the foot to rotate said brake arm from said forward position at least substantially toward said rearward position.

30. The stroller of claim 19 wherein said support surface engaging portion has a foot engageable portion positioned when said brake arm is in said rearward position to be engageable by a foot of a user of the stroller from behind the stroller for applying a force to said support surface engaging portion with the foot to prevent rearward movement of the support surface engaging portion along the support surface as the user pulls the frame rearward to rotate the brake arm from said rearward position at least substantially toward said forward position.

31. The stroller of claim 19 wherein said brake arm is rotatable with said brake coupler through an intermediate position between said forward and rearward position, said brake arm extending downward and said support surface engaging portion being below said rear axle in engagement with the support surface when in said intermediate position, said brake arm length being sized to support said rear axle at a distance above the support surface sufficient to lift said left and right rear wheels above the support surface when said brake arm is rotated to said intermediate position.
